(19) Europäisches Patentamt
European Patent Office
Office européen des brevets

(11) **EP 1 130 311 B1**

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(51) Int Cl.:
*F21S 8/00* *(2006.01)* *F21V 5/02* *(2006.01)*
*G02B 6/00* *(2006.01)* *F21W 131/402* *(2006.01)*

(21) Anmeldenummer: **01105267.7**

(22) Anmeldetag: **05.03.2001**

(54) **Leuchte mit einer mehreckigen Lichtausstrittsfläche und einer geradlinigen Prismenstruktur**

Luminaire having a polygonal light emission window and a rectilinear prism structure

Luminaire avec une surface d'émission de la lumière polygonale et une structure prismatique rectiligne

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **03.03.2000 DE 10010468**

(43) Veröffentlichungstag der Anmeldung:
**05.09.2001 Patentblatt 2001/36**

(73) Patentinhaber: **Siteco Beleuchtungstechnik GmbH**
**83301 Traunreut (DE)**

(72) Erfinder:
• **Leibig, Joachim**
**83374 Traunwalchen (DE)**
• **Belloni, Paola**
**83278 Traunstein (DE)**
• **Prodell, Peter**
**83308 Trostberg (DE)**

(74) Vertreter: **Schohe, Stefan et al**
**Boehmert & Boehmert**
**Anwaltspartnerschaft mbB**
**Pettenkoferstrasse 22**
**80336 München (DE)**

(56) Entgegenhaltungen:
**WO-A-00/11399** **DE-A1- 19 961 491**
**DE-U1- 8 915 821**

**Beschreibung**

Die Erfindung betrifft eine Leuchte zur Beleuchtung von Innenräumen, welche einen Hohllichtleiter mit mindestens einem Hohlraum aufweist, in den Licht einer oder mehrerer Lichtquellen eingekoppelt wird und über mindestens eine Lichtauskoppeleinrichtung zum Austritt an einer Lichtaustrittsfläche der Leuchte ausgekoppelt wird, wobei die Lichtauskoppeleinrichtung aus einem lichtdurchlässigen Material besteht und eine oder mehrere Grenzflächen zwischen diesem Material und einem Medium mit geringerem Brechungsindex aufweist, die mit einer lichtbrechenden Struktur ausgebildet sind.

Eine Leuchte dieser Art ist aus US-PS 5 863 114 bekannt. Bei dieser bekannten Leuchte sind zur Lichtauskopplung Prismen mit einem dreieckigen Querschnitt vorgesehen, deren Prismenwinkel 90° oder weniger beträgt. Wenn der Prismenwinkel in dieser Weise gewählt wird, wird Licht, das im wesentlichen senkrecht auf die Platte einfällt, unmittelbar zurückreflektiert.

Während diese Leuchte für allgemeine Beleuchtungszwecke durchaus geeignet sein mag, ist sie in Anwendungsfällen, in denen eine Abschirmung gefordert wird, wie dies bei vielen Innenraumleuchten der Fall ist, nicht ohne weiteres geeignet. Geltende Normvorschriften bzw. Normvorschläge für Bildschirmarbeitsplätze fordern beispielsweise, daß die mittlere Leuchtdichte der Lichtaustrittsfläche in mehreren Raumebenen oberhalb eines Grenzwinkels unter einen vorbestimmten Grenzwert, nach den geltenden Normen und Normvorschlägen 200 cd/m$^2$, 500 cd/m$^2$ oder 1000 cd/m$^2$, fällt. Die bei der US-PS 5 863 114 verwendeten Prismen erzeugen keine oder nur eine unbefriedigende Abschirmung. Daher wären bei der dort beschriebenen Leuchte zusätzliche Abschirmmaßnahmen, beispielsweise in der Form von Blenden, Rastern oder dgl. notwendig.

DE 89 15 821 U1 offenbart eine Wand- oder Deckenleuchte mit einem Gehäuse, in welchem ein herkömmlicher Reflektor, zum Beispiel ein Parabolreflektor, angeordnet ist. In dem Reflektor sind mehrere Leuchtmittel angeordnet. Die Lichtaustrittsseite des Reflektors ist mit einer transparenten Abdeckung verschlossen, die auf der den Lampen zugewandten Seite mit asymmetrischen Prismen besetzt ist. Die Prismen erzeugen eine Batwing-Verteilung in einem Querschnitt senkrecht zur Lichtaustrittsfläche.

WO 00/11399 offenbart eine Leuchte mit einem Lichtleiterelement, welches aus einem massiven transparenten Material gebildet ist. Die Oberseite des Lichtleiterelements, welche der Lichtaustrittsfläche gegenüber liegt, kann keilförmig ausgebildet sein, um eine Querentblendung der Leuchte zu erzeugen. Ferner sind an der Austrittsfläche ein oder mehrere Lichtstreukörper vorgesehen, welche eine Prismenstruktur aufweisen.

Es ist die Aufgabe der Erfindung, eine Leuchte der eingangs beschriebenen Art, speziell in der Form einer Rundleuchte, eines Downlights oder dgl., zur Verfügung zu stellen, welche ohne zusätzliche Maßnahmen eine Abschirmung des abgestrahlten Lichts erzeugt.

Erfindungsgemäß wird diese Aufgabe gelöst durch eine Leuchte zur Beleuchtung von Innenräumen mit einem nicht viereckigen Gehäuse und/oder einer nicht viereckigen Lichtaustrittsfläche, insbesondere Rundleuchte oder Downlight, welche mindestens einen Hohllichtleiter mit einem Hohlraum aufweist, in den Licht einer oder mehrerer Lichtquellen eingekoppelt wird und über mindestens eine Lichtauskoppeleinrichtung zum Austritt an einer Lichtaustrittsfläche der Leuchte ausgekoppelt wird, wobei die Lichtauskoppeleinrichtung aus einem lichtdurchlässigen Material besteht und eine oder mehrere Grenzflächen zwischen diesem Material und einem Medium mit geringerem Brechungsindex, z.B. Luft, aufweist, die mit einer lichtbrechenden Struktur ausgebildet sind, welche dadurch gekennzeichnet ist, daß zumindest zwei lichtbrechende Strukturen mit linienförmigen Strukturelementen vorgesehen sind, wobei die lichtbrechenden Strukturen eine Lichtauskopplung in mehreren Flächen senkrecht zu der Lichtaustrittsfläche der Leuchte oberhalb eines Grenzwinkels zu einer Senkrechten zu der Lichtaustrittsfläche im wesentlichen verhindern und dadurch eine Abschirmung in diesen Flächen erzeugen und daß zumindest eine der, vorzugsweise alle lichtbrechenden Strukturen aus parallelen geraden linienförmigen lichtbrechenden Strukturelementen bestehen, und die Linien, welche die Geometrie der ersten Struktur definieren, mit den Linien, welche die Geometrie der zweiten Struktur definieren, einen nicht verschwindenden Winkel einschließen. Das Gehäuse und/oder die Lichtaustrittsfläche haben mehr als vier Ecken.

Die Erfindung betrifft insbesondere, aber nicht ausschließlich solche Leuchten, welche von Leuchten verschieden sind, die in der EP 11 206 00 A1 beschrieben sind, insbesondere solche Leuchten, die von Leuchten mit mindestens einem Lichtleiter verschieden sind, in den von einer oder mehreren Lampen Licht über eine oder mehrere Lichteinkoppelseiten eingekoppelt wird und der mindestens eine von den Lichteinkoppelseiten verschiedene Lichtauskoppelseite mit einer Lichtauskoppelfläche besitzt, über welche Licht ausgekoppelt wird, wobei zumindest an einer Lichtauskoppelseite eine Struktur vorgesehen ist, welche eine Abschirmung des über diese Lichtauskoppelseite austretenden Lichts bewirkt, welche dadurch gekennzeichnet ist, daß die Struktur aus Licht transmittierenden Elementen besteht oder diese aufweist, die jeweils bezüglich einer Linie parallel zu der Lichtauskoppelfläche translationsinvariant sind, derart, daß sie entlang dieser Linie einen konstanten Querschnitt besitzen, wobei diese Elemente in der Richtung senkrecht zu dieser Linie im Querschnitt eine Breite besitzen, welche, bezogen auf eine Richtung senkrecht zu der Lichtauskoppelseite, von der dem Lichtleiter zugewandten Seite zu der von dem Lichtleiter abgewandten Seite zunimmt. Die Erfindung betrifft also insbesondere solche Leuchten, bei denen das Licht nicht über eine Seite eingekoppelt wird oder bei denen der Querschnitt der Licht transmittierenden Elemente, bezogen auf eine Richtung senkrecht zu der Lichtauskoppelseite, von der dem Lichtleiter zugewandten Seite zu der von dem Lichtleiter abgewandten Seite nicht zunimmt.

Das Gehäuse und/oder die Lichtaustrittsfläche kann insbesondere rund, elliptisch oder polygonförmig sein. Auch eine Leuchte mit einem dreieckigen Gehäuse und/oder einer dreieckigen Lichtaustrittsfläche sind möglich.

Gemäß einer Ausführungsform der Erfindung kann vorgesehen sein, daß der Lichtauskoppeleinrichtung gegenüberliegend eine reflektierende, den Hohlraum begrenzende Wand vorgesehen ist, deren Abstand von der Lichtauskoppeleinrichtung, ausgehend von der Stelle der Lichteinkopplung zumindest über einen Teilabschnitt, z.B. in radialer Richtung, abnimmt.

Im Regelfall wird das Licht der Lampe zumindest teilweise direkt in den Hohlraum eingestrahlt, so daß sich der erwähnte Abstand in der Richtung weg von der Lampe verringert. Die besagte, der Lichtauskoppeleinrichtung gegenüberliegende Wand des Hohllichtleiters ist gemäß einer Ausführungsform der Erfindung die Dachwand des Hohllichtleiters bzw. des Hohlraums, wobei in diesem Fall die Höhe des Hohlraums von der Stelle der Lichteinkopplung in radialer Richtung abnimmt.

Gemäß einer vorteilhaften Ausführungsform der Erfindung wird an zwei einander gegenüberliegenden Stellen Licht von einer Lampe, beispielsweise einer Ringlampe, oder von zwei einander gegenüberliegenden Lampen eingekoppelt und die Wand ist zwischen diesen Stellen soweit heruntergezogen, daß eine direkte Lichteinstrahlung von der einen Lampe bzw. dem einen Lampenabschnitt und dem zugehörigen Einkoppelreflektor auf die gegenüberliegende Lampe bzw. den gegenüberliegenden Lampenabschnitt vermieden oder zumindest reduziert wird.

Die Erfindung kann vorsehen, daß die linienförmigen lichtbrechenden Strukturelemente Seitenwände im wesentlichen parallel zu der Linienrichtung aufweisen, die an dem freien Ende der Strukturelemente einen Winkel einschließen, der größer als 90° ist, vorzugsweise in einem Bereich von 90° bis 130° liegt und insbesondere gemäß einer Ausführungsform der Erfindung in einem Bereich von 110° bis 128° liegen kann. Die vorangehend angegebenen Winkelbereiche von 90° bis 130° bzw. 110° bis 128° sind besonders für einen Brechungsindex von ungefähr 1,49 bevorzugt, können jedoch auch bei Materialien mit einem anderen Brechungsindex verwendet werden, der nicht allzu sehr von 1,49 verschieden ist. Dies gilt für gängige Materialien wie Polycarbonat oder Polyester. Grundsätzlich können für von 1,49 verschiedene Brechungsindizes die bevorzugten Winkelbereiche verschieden sein, wobei sich diese bevorzugten Winkelbereiche für diese Brechungsindizes dadurch ermitteln lassen, daß die gleichen Abschirmwinkel für einen vorgegebenen Grenzwert der Leuchtdichte erzielt werden wie in dem Winkelbereich von 90° bis 130° bzw. 110° bis 128° bei einem Brechungsindex von 1,49. Grundsätzlich sollte gemäß den bevorzugten Ausführungsformen dieser Winkel jedoch, unabhängig vom Brechungsindex, größer als 90° sein.

Vorzugsweise ist der besagte Winkel bei allen Strukturelementen gleich, die im übrigen auch alle die gleiche Querschnittsform und ggf. auch identische Abmessungen haben können.

Eine Abschirmung der Leuchte bedeutet, daß in einer Ebene senkrecht zu der Lichtaustrittsfläche die mittlere Leuchtdichte oberhalb eines Grenzwinkels (Abschirmwinkel) zu einer Senkrechten zu der Lichtaustrittsfläche in dieser Ebene unterhalb eines vorbestimmten Grenzwerts liegt.

Der Grenzwert der Leuchtdichte kann entsprechend den geltenden Normen bzw. Normvorschlägen bei 200 cd/m$^2$, 500 cd/m$^2$ oder 1000 cd/m$^2$ liegen. Der Abschirmwinkel liegt bei gängigen Anwendungen im Bereich von mehr als 45°, insbesondere 45° bis 75°, bevorzugt in einem Bereich von 50° bis 75° oder 50° bis 65°, insbesondere 50° bis 65° oder 55° bis 65°. Die Abschirmung kann auch in einem raumbezogenen Ebenensystem vorgesehen sein, z.B. dem C-Ebenensystem gemäß DIN 5032-1

Die lichtbrechenden Elemente haben gemäß der bevorzugten Ausführungsform der Erfindung entlang der Linienrichtung einen konstanten Querschnitt, der insbesondere die Form eines Dreiecks annehmen kann. Während gemäß einer bevorzugten Ausführungsform die Seitenwände an dem freien Ende der Strukturelemente direkt aneinander anschließen, kann auch vorgesehen sein, daß das freie Ende der Strukturelemente abgeflacht ist und die Seitenwände durch eine ebene oder gekrümmte Fläche verbunden sind. Im Fall von ebenen Seitenflächen oder Seitenflächen mit einem ebenen Abschnitt an dem freien Ende ist der vorangehend genannte Winkel dann durch die imaginäre Verlängerung der ebenen Seitenwände bzw. der ebenen Abschnitte der Seitenwände bestimmt. Im Falle von gekrümmten Seitenwänden kann der vorangehend erwähnte Winkel dem Winkel eines Dreiecks entsprechen, dem der Querschnitt der lichtbrechenden Elemente optimal, d.h. mit möglichst geringer Flächenabweichung zwischen der Fläche des Dreiecks und der Querschnittsfläche des lichtbrechenden Elements, einbeschrieben ist. Im Falle einer konvexen, d.h. nach außen gekrümmten Seitenwand würde dieser Winkel durch den Schnittwinkel von zwei Tangenten gebildet, die an die Seitenlinien des Querschnitts des lichtbrechenden Elements angelegt werden, während im Falle einer konkaven, d.h. nach innen gekrümmten Seitenwand, dieser Winkel durch zwei Geraden festgelegt würde, die jeweils durch den Kopfpunkt und den Fußpunkt einer Seitenlinie des Querschnitts, d.h. einer der Seitenwand im Querschnitt entsprechenden Linie, gelegt sind.

Gemäß einer bevorzugten Ausführungsform der Erfindung bestehen die lichtbrechenden Elemente aus einem Körper, der durch Verschiebung einer Querschnittsfläche, beispielsweise eines Dreiecks, entlang einer Geraden erzeugt wird.

Es kann insbesondere vorgesehen sein, daß in der Lichtauskoppeleinrichtung zumindest zwei lichtbrechende Strukturen mit linienförmigen Strukturelementen vorgesehen sind, wobei die Linien, welche die Geometrie der ersten Struktur definieren, mit den Linien, welche die Geometrie der zweiten Struktur definieren, einen nicht verschwindenden Winkel einschließen und vorzugsweise senkrecht auf diesen stehen. Insoweit die Strukturen nicht in parallelen Flächen ausgebildet sind, schneiden sich die Linien in einer Projektion der ersten auf die zweite Struktur entlang der Richtung des Lichtwegs zwischen den Strukturen.

Die lichtbrechenden Strukturen lassen sich z.B. dadurch herstellen, daß eine Platte oder Folie aus einem gängigen lichtdurchlässigen Material, wie Glas, Polyester, Polystyrol, Polycarbonat oder Polymethylmethacrylat, auf einer Fläche entsprechend bearbeitet oder geformt wird. Alternativ kann auch eine Folie, welche die lichtbrechende Struktur enthält, auf eine solche Platte aufgeklebt oder auch ohne Trägerplatte eingesetzt werden. Wenn mehrere derartige Strukturen vorgesehen sind, werden vorzugsweise zwei übereinander geschichtete Platten verwendet, die jeweils an einer Grundseite mit einer lichtbrechenden Struktur wie vorangehend erwähnt versehen sind. Die lichtbrechenden Strukturen in den verschiedenen Platten können in dieselbe Richtung weisen oder in entgegengesetzte Richtungen weisen und, in Bezug auf den Hohlraum des Hohllichtleiters, zu diesem hinweisen oder von diesem wegweisen.

Alternativ kann vorgesehen sein, daß auf zwei einander gegenüberliegenden Seiten einer Platte jeweils eine lichtbrechende Struktur ausgebildet oder aufgebracht ist, wobei die Linien der beiden Strukturen sich in einer Projektion schneiden und vorzugsweise senkrecht aufeinander stehen.

Die Platten werden in konventioneller Weise durch geeignete Mittel an dem Gehäuse der Leuchte gehalten. Gemäß einer Ausführungsform der Erfindung bildet der Hohllichtleiter der Leuchte einen nach unten offenen Kasten, der durch die besagten Platten auf seiner Unterseite verschlossen wird.

Gemäß einer Ausführungsform ist die Leuchte so eingerichtet, daß das Licht von einer oder mehreren Lichtquellen von der radialen Außenseite des Hohlraums aus eingekoppelt wird.

Die radial äußere Seite des Hohllichtleiters ist vorzugsweise offen. Den Hohllichtleiter von außen umschließend ist gemäß einer Ausführungsform der Erfindung eine Ringlampe angeordnet, welche radial von außen Licht in den Hohlraum des Hohllichtleiters einstrahlt. Anstelle einer Ringlampe können jedoch auch mehrere über den Umfang des Hohllichtleiters verteilte Lichtquellen vorgesehen sein. Statt einer konventionellen Lampe können auch Leuchtdioden, photolumineszente Folien oder dgl. als Lichtquelle verwendet werden.

Es kann alternativ oder ergänzend vorgesehen sein, daß der Hohllichtleiter einen radial inneren Rand besitzt und eine oder mehrere Lichtquellen entlang des radial inneren Rands angeordnet sind, deren Licht in den Hohllichtleiter eingekoppelt wird.

Die Erfindung kann auch vorsehen, daß an einen inneren radialen Rand eines ersten Hohllichtleiters anschließend ein zweiter, vorzugsweise konzentrischer Hohllichtleiter vorgesehen ist, wobei eine oder mehrere Lichtquellen zwischen dem inneren radialen Rand des ersten Hohllichtleiters und dem äußeren radialen Rand des zweiten Hohllichtleiters angeordnet sind. Es kann auch vorgesehen sein, daß eine Lichtquelle sich durch eine Öffnung in einer Wand des Hohllichtleiters, insbesondere durch eine Öffnung in der Dachwand, in den Hohlraum des Hohllichtleiters erstreckt.

Die Erfindung kann vorsehen, daß ein oder mehrere elektrische und/oder mechanische Komponenten zumindest teilweise in einem Raumbereich außerhalb des Hohllichtleiters angeordnet sind, in dem die besagte Wand des Hohllichtleiters einen gegenüber einer Lichteinkoppelstelle verringerten Abstand von der Lichtauskoppeleinrichtung besitzt und der zwischen der Lichtauskoppeleinrichtung und einer Ebene liegt, deren Abstand von der Lichtauskoppeleinrichtung dem maximalen Abstand der besagten Wand von der Lichtauskoppeleinrichtung entspricht.

Gemäß einer besonderen Ausführungsform der Erfindung ist vorgesehen, daß eine Wand des Gehäuses derjenigen Wand des Hohllichtleiters gegenüberliegt, welche ihrerseits der Lichtaustrittsfläche gegenüberliegt, und mit dieser einen Raumbereich außerhalb des Hohllichtleiters festlegt, in dem ein oder mehrere elektrische und/oder mechanische Komponenten angeordnet sind, die sich zumindest teilweise in den Abschnitt des Raumbereichs erstrecken, in dem die besagte Wand des Hohllichtleiters einen gegenüber der Lichteinkoppelstelle verringerten Abstand von der Lichtauskoppeleinrichtung besitzt.

Die Erfindung kann in einer Abwandlung dieser Ausführungsform auch vorsehen, daß statt einer Gehäusewand ein Bügel vorgesehen ist, an dem die elektrischen und/oder mechanischen Komponenten so befestigt sind, daß sie sich in den Bereich erstrecken, in dem die Wand des Hohllichtleiters einen gegenüber der Lichteinkoppelstelle verringerten Abstand von der Lichtauskoppeleinrichtung besitzt.

Bei diesen Ausführungsformen der Erfindung wird in vorteilhafter Weise ausgenutzt, daß sich durch die Verringerung des Abstands der besagten Wand von der Lichtauskoppeleinrichtung ein zusätzliches Volumen in dem Leuchtengehäuse ergibt. Dieser zusätzliche Raum wird für die Unterbringung von Komponenten der Leuchte genutzt, so daß die Bauhöhe insgesamt verringert werden kann. Der Abstand der Gehäusewand von der besagten Wand des Hohllichtleiters kann dabei in derselben Richtung und in demselben Bereich zunehmen, in dem der Abstand der Wand des Hohllichtleiters von der Lichtauskoppeleinrichtung abnimmt.

Die Erfindung kann auch vorsehen, daß die Leuchte eine Einrichtung zur Abgabe eines Lichtanteils zur indirekten Beleuchtung aufweist. Hierfür kann eine zweite Lichtauskoppeleinrichtung, insbesondere gegenüber der ersten Lichtauskoppelvorrichtung, vorgesehen sein, welche Licht aus dem Hohllichtleiter auskoppelt. Diese Lichtauskoppeleinrichtung kann, muß aber nicht eine lichtbrechende Struktur zur Lichtauskopplung aufweisen. Beispielsweise kann die der ersten Lichtauskoppeleinrichtung gegenüberliegende Wand teilweise reflektierend und teilweise lichtdurchlässig ausgebildet sein und/oder lichtdurchlässige und lichtundurchlässige Bereiche, beispielsweise in der Form einer Lochstruktur, aufweisen.

Die erfindungsgemäßen Leuchten können in verschiedener Form, beispielsweise als Downlight, Pendelleuchte, Einbau- oder Anbauleuchte, realisiert werden.

Weitere Merkmale der vorliegenden Erfindung ergeben sich aus der nachfolgenden Beschreibung von Ausführungsbeispielen der Erfindung anhand der beigefügten schematischen Zeichnungen.

Fig. 1      zeigt schematisch eine Ansicht eines erfindungsgemäßen Downlights von unten,

Fig. 2      zeigt einen Querschnitt durch den Hohllichtleiter der Leuchte gemäß Fig. 1 entsprechend der Linie II-II in Fig. 1,

Fig. 3      zeigt schematisch einen vergrößerten Ausschnitt aus einem radialen Querschnitt der Prismenplatten entlang der Linie II-II,

Fig. 4      zeigt schematisch einen vergrößerten Ausschnitt aus einem radialen Querschnitt der Prismenplatten entlang der Linie III-III,

Fig. 5      zeigt den Hohllichtleiter einer Leuchte gemäß einer zweiten Ausführungsform der Erfindung,

Fig. 6      zeigt einen teilweisen Querschnitt durch eine dritte Ausführungsform einer erfindungsgemäßen Leuchte,

Fig. 7      zeigt eine Teilansicht der Leuchte gemäß Fig. 6 von unten,

Fig. 8      zeigt einen teilweisen Querschnitt einer vierten Ausführungsform einer erfindungsgemäßen Leuchte,

Fig. 9      zeigt eine Teilansicht der Leuchte gemäß Fig. 8 von unten,

Fig. 10     zeigt einen Querschnitt einer fünften Ausführungsform einer erfindungsgemäßen Leuchte in der Form einer Deckeneinbauleuchte,

Fig. 11     zeigt einen Querschnitt einer sechsten Ausführungsform einer erfindungsgemäßen Leuchte in der Form einer Pendelleuchte.

Fig. 12     zeigt einen Querschnitt einer siebten Ausführungsform einer erfindungsgemäßen Leuchte,

Fig. 13     zeigt einen Querschnitt einer achten Ausführungsform einer erfindungsgemäßen Leuchte,

Fig. 14     zeigt einen Querschnitt einer neunten Ausführungsform einer erfindungsgemäßen Leuchte,

Fig. 15     zeigt einen Querschnitt einer zehnten Ausführungsform einer erfindungsgemäßen Leuchte.

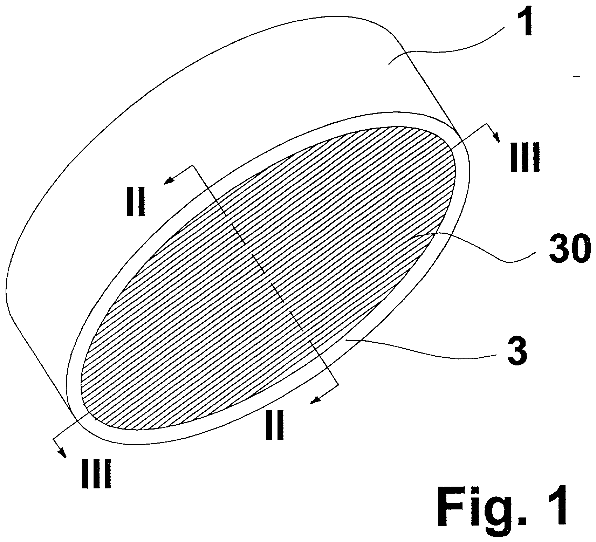

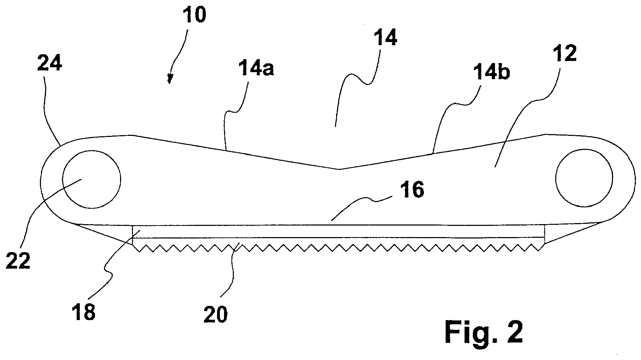

In Fig. 1 ist schematisch eine Ausführungsform einer erfindungsgemäßen Leuchte in der Form eines Downlights dargestellt. Dieses Downlight besitzt ein im wesentlichen kreiszylinderförmiges Gehäuse 1 sowie eine konzentrisch zu diesem Gehäuse angeordnete Lichtaustrittsfläche 3. Diese Lichtaustrittsfläche 3 ist gleichzeitig die Lichtauskoppelfläche eines Hohllichtleiters 10, der in dem Gehäuse 1 angeordnet ist und der in einem Querschnitt gemäß der Linie II-II der Fig. 1 in Fig. 2 schematisch dargestellt ist.

Der Hohllichtleiter 10 weist einen Hohlraum 12 auf, der von einer Dachwand 14 mit Wandabschnitten 14a und 14b und einer Lichtauskoppeleinrichtung 16 begrenzt wird, die aus Prismenplatten 18 und 20 besteht. Auf der radial äußeren Seite ist der Hohlraum 12 offen. An dieser offenen Seite wird über eine Ringlampe 22 und einen der Ringlampe 22 zugeordneten Einkoppelreflektor 24 Licht in den Hohlraum 12 eingekoppelt. Die Dachwand 14 ist reflektierend ausgebildet und reflektiert auf sie einfallendes Licht zu der Lichtauskoppeleinrichtung 16.

Das Licht von der Lampe 22 bzw. dem Einkoppelreflektor 24 fällt zu einem Teil direkt auf die Platte 18 ein. Ein Teil dieses Lichts tritt durch die Platten 18 und 20 hindurch und an der Lichtaustrittsfläche 3 aus. Ein weiterer Teil dieses Lichts wird an der Platte 18 reflektiert. Die Dachwand 14 reflektiert das auf sie direkt von der Lampe 22 bzw. dem Einkoppelreflektor 24 einfallende Licht sowie das zu ihr von der Platte 18 zurückreflektierte Licht nach unten zu der Prismenplatte 18.

Der Grad der Lichtauskopplung an der Prismenplatte 18 hängt unter anderem von dem Einfallswinkel der einfallenden Lichtstrahlen ab. Es hat sich gezeigt, daß sich eine gleichmäßigere Lichtstärkeverteilungskurve der Leuchte erreichen läßt, wenn die reflektierende Dachwand zu der Lichtauskoppeleinrichtung geneigt ist und sich der Abstand zwischen der Lichtauskoppeleinrichtung und der Dachwand in Richtung weg von der Lampe verringert. Insbesondere wird dadurch die Lichtstärkeverteilungskurve im Bereich von 0° vergleichmäßigt und ein Minimum der Lichtstärkeverteilung in diesem Bereich vermieden oder abgeschwächt. Es hat sich weiterhin gezeigt, daß eine solche Gestaltung zu einer Verbesserung des Leuchtenwirkungsgrades führt. Aus diesem Grund ist die Dachwand 14 kegelförmig ausgebildet und weist im radialen Querschnitt zwei gerade, zueinander geneigte Abschnitte 14a und 14b auf, so daß die Höhe des Hohlraums 12 in der Mitte am kleinsten und an dem radial äußeren Rand am größten ist.

Die Prismenplatten 18 und 20 sind mit einer Struktur versehen, welche eine Lichtauskopplung oberhalb eines Grenzwinkels zu der Senkrechten zu der Lichtaustrittsfläche in bestimmten Ebenen im wesentlichen verhindert und dadurch eine Abschirmung, d.h. eine Absenkung der mittleren Leuchtdichte der Lichtaustrittsflächfhe unter einen Grenzwert, z.B. 200 cd/m$^2$, 500 cd/m$^2$ oder 1000 cd/m$^2$, erzeugt.

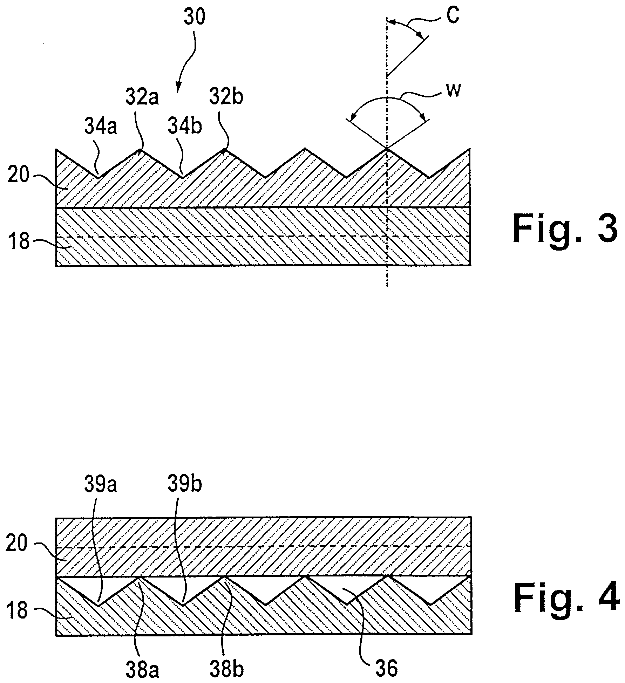

Die Prismenplatte 20 weist auf ihrer von dem Hohlraum 12 abgewandten Seite eine Struktur von parallelen Prismen 30 auf (vgl. Fig. 1), die in einem radialen Querschnitt eine dreieckige Form besitzen, wie man anhand von Fig. 3 erkennen kann. Fig. 3 zeigt, daß die Prismen unmittelbar aneinander angrenzen, gleichmäßig voneinander beabstandete Grate 32a, 32b, ... (nachfolgend kollektiv mit 32 bezeichnet) aufweisen und durch gleichmäßig voneinander beabstandete Vertiefungen 34a, 34b, ..., nachfolgend kollektiv mit 34 bezeichnet, voneinander getrennt sind. Die Vertiefungen 34 und die Grate 32 bilden auf der von dem Hohlraum 12 abgewandten Seite der Platte 20 gerade parallele Linien, die in Fig. 1 schematisch dargestellt sind.

Die Abschirmung kann z.B. durch Totalreflexion in den Prismen erzeugt werden. Licht in den Prismen wird beim Einfall auf die Grenzfläche zu einem optisch dünneren Medium, z.B. Luft, vollständig in die Prismen zurückreflektiert, wenn der Einfallswinkel größer als der Winkel der Totalreflexion ist. Dementsprechend ist der Austrittswinkel, bezogen auf die Grenzflächen der Prismen, begrenzt. Die Seitenwände der Prismen zwischen den Graten 32 und den Vertiefungen 34 stehen jedoch schräg zu der Lichtaustrittsfläche, so daß die Begrenzung des Lichtaustrittswinkels durch den Grenzwinkel der Totalreflexion nicht notwendigerweise eine Abschirmung bedeutet. Ein mögliches Kriterium für eine Abschirmung läßt sich dadurch ableiten, daß für Strahlengänge in den Prismen bis zu einer vorgegebenen Höchstzahl k (z.B. k = 1, 2, 3 oder 4) von inneren Reflexionen in den Prismen vor einem Lichtaustritt aus der Struktur der Austrittswinkel bezüglich einer Senkrechten zu der Grundfläche der lichtbrechenden Struktur maximal gleich dem Abschirmwinkel ist. Andere Abschirmmechanismen oder Abschirmkriterien können alternativ oder ergänzend auch verwendet werden.

Es hat sich gezeigt, daß für Prismen mit einem Querschnitt in der Form eines gleichschenkligen Dreiecks eine gute Abschirmung erreicht wird, wenn zwischen dem Abschirmwinkel C und dem Prismenwinkel w für eine Grenzfläche zu Luft die folgenden Relationen bestehen:

$$w/2 \le C \tag{1}$$

$$w \ge 2\,(2\,\arcsin(1/n) + 90)/3 \tag{2}$$

$$\tan(w/2) \le (n\,\sin(\arcsin(1/n) - 3\,w/2) + \cos(w/2))\,/\,(n\,\cos(\arcsin(1/n) - 3\,w/2) + \sin(w/2)), \tag{3}$$

wobei n der Brechungsindex der Platte 20 ist.

Der Prismenwinkel w liegt bei den derzeitig bevorzugten Ausführungsformen bei einem Brechungsindex von 1,49 im Bereich von 90° bis 130°, besonders bevorzugt im Bereich von 110° bis 128°.

Anstelle der in Fig. 3 dargestellten dreieckförmigen Prismen können auch andere Prismenformen verwendet werden.

Die Prismenplatte 18 ist wie die Platte 20 mit einer Struktur von parallelen geradlinigen Prismen 36 versehen, welche Grate 38a, 38b, ... (nachfolgend kollektiv mit 38 bezeichnet) aufweisen und durch Vertiefungen 39a, 39b, ... (nachfolgend mit 39 bezeichnet) voneinander getrennt sind. Ebenso wie die Prismen 30 erzeugen die Prismen 36 in der Richtung quer zu ihrer Längsrichtung eine Abschirmung, wobei insbesondere die Relationen (1) bis (3) erfüllt sein können. Wie man anhand von Fig. 3 und 4 erkennt, steht die Längsrichtung der Prismen 30 senkrecht auf der Längsrichtung der Prismen 36. Die Prismenplatten 18 und 20 erzeugen daher zusammen eine Abschirmung in zueinander senkrechten Ebenen, die senkrecht auf der Lichtaustrittsfläche 3 stehen. Auf diese Weise wird eine Abschirmung in mindestens zwei Ebenen erzeugt. Der Abschirmwinkel C kann in diesen beiden Ebenen verschieden sein. Dementsprechend können die Prismen 30 und 36 auch einen verschiedenen Prismenwinkel w aufweisen.

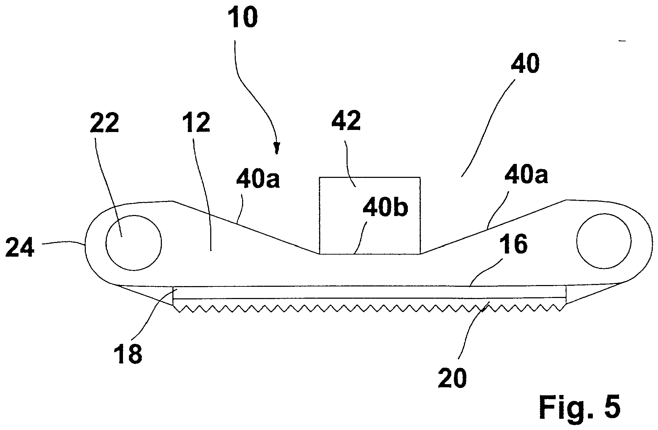

Fig. 5 zeigt eine Abwandlung der Ausführungsform gemäß dem vorangehend beschriebenen Beispiel, wobei gleiche Bestandteile mit gleichen Bezugzeichen versehen sind. Bei dieser Ausführungsform besteht die Dachwand 40 aus einem zu der Lichtauskoppeleinrichtung 16 geneigten ringförmigen Wandabschnitt 40a, der sich jeweils bis zum radial äußeren Rand des Hohllichtleiters 10 erstreckt, und einem dazwischenliegenden waagrechten kreisförmigen Abschnitt 40b parallel zu den Platten 18 und 20. An der Dachwand ist außerhalb des Hohllichtleiters 10 ein Vorschaltgerät 42 in dem Bereich des abgesenkten Wandabschnitts angebracht. Das lichttechnische Prinzip entspricht demjenigen des Ausführungsbeispiels entsprechend Fig. 1 bis 4. Durch diese Anordnung wird der Leuchtenwirkungsgrad verbessert, da der einen Lampenabschnitt gegenüberliegende Einkoppelbereich durch den Konus, den die Wand 40 bildet, besser abgedeckt wird.

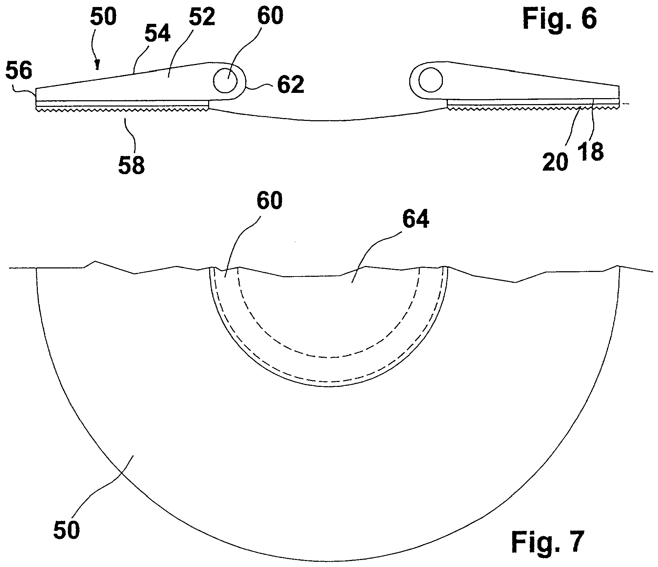

Fig. 6 zeigt eine dritte Ausführungsform einer erfindungsgemäßen Leuchte, die wieder ein Downlight sein kann, wobei nur für die Lichttechnik wesentliche Elemente dargestellt sind. Bei dieser Ausführungsform hat der Hohllichtleiter 50 eine Kreisringform. Der zugehörige Hohlraum 52 wird durch eine ebenfalls kreisringförmige Dachwand 54, eine radial äußere Seitenwand 56 und eine Lichtauskoppeleinrichtung 58 gebildet, wobei die Dachwand 54 und die Seitenwand 56 auf der Seite des Hohlraums 52 reflektierend ausgebildet sind. Die Dachwand 54 ist in einem radialen Querschnitt im wesentlichen gerade und zu der Lichtauskoppeleinrichtung 58 geneigt, so daß sich die Höhe des Hohlraums 52 zum radial äußeren Rand hin verringert. Am radial inneren Rand des Hohlraums 52 ist eine Ringlampe 60 mit einem zugehörigen Einkoppelreflektor 62 angeordnet, welche zusammen Licht in den Hohlraum 52 einkoppeln, das über die Lichtauskoppeleinrichtung 58 ausgekoppelt wird. Die Lichtauskoppeleinrichtung besteht wieder aus Prismenplatten 18 und 20, die wie vorangehend beschrieben ausgebildet sind. Die Prismenlinien der Platte 20 sind in Fig. 7 nicht dargestellt. Die Öffnung in der Mitte des Hohllichtleiters 50 kann durch eine Abdeckung 64 abgedeckt sein. Die Einkoppelreflektoren 62 und die Abdeckung 64 können teilweise lichtdurchlässig sein, so daß ein Teil des Lichts auch über die Abdeckung 64 austritt. Wenn die Leuchte insgesamt eine Kreisringform haben soll, kann die Abdeckung 64 natürlich auch wegfallen.

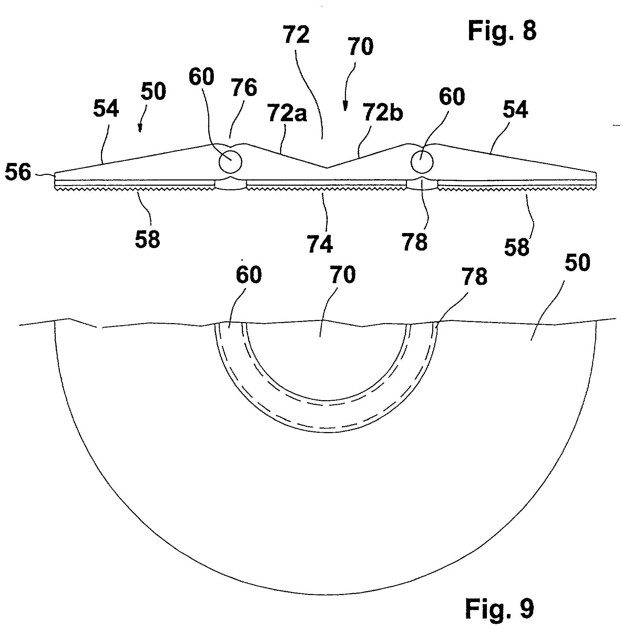

Fig. 8 und 9 zeigen eine Abwandlung der Ausführungsform gemäß Fig. 6 und 7, wobei gleiche Elemente mit den gleichen Bezugszeichen versehen sind. Bei dieser Ausführungsform ist in die innere Aussparung des kreisringförmigen Hohllichtleiters 50 ein weiterer Hohllichtleiter 70 mit einer kegelförmigen Dachwand 72, die in einem radialen Querschitt zwei zueinander geneigte reflektierende Dachwandabschnitte 72a und 72b aufweist, gegenüber einer Lichtauskoppeleinrichtung 74 angeordnet. Die Ausbildung des Hohllichtleiters 70 entspricht derjenigen des Hohllichtleiters gemäß Fig. 1 bis 4. Die Ringlampe 60 ist zwischen der radial inneren Seite des Hohllichtleiters 50 und der radial äußeren Seite des Hohllichtleiters 70 angeordnet und koppelt Licht in beide Hohllichtleiter ein. Zur Verbesserung der Lichteinkopplung sind vogelschwingenförmige Reflektoren 76 und 78 oberhalb und unterhalb der Ringlampe 60 vorgesehen. Der untere Reflektor 78 dient außerdem als Abschirmung der Lampe 60 nach unten. Eine solche Abschirmung kann auch entfallen. Beispielsweise können die Lichtauskoppeleinrichtungen 58 und 74 der beiden Hohllichtleiter 50 und 70 durch zwei übereinanderliegende Prismenplatten gebildet werden, die beiden Hohllichtleitern gemeinsam sind.

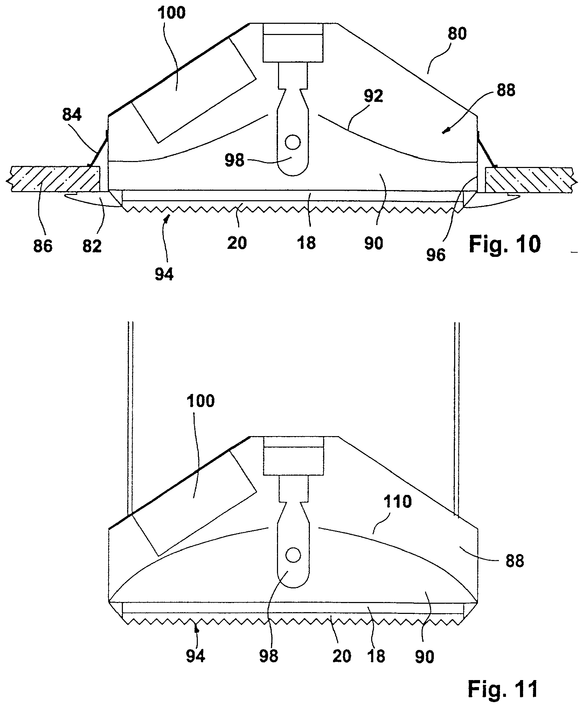

Erfindungsgemäß können anstelle von Ringlampen auch andere Lampentypen verwendet werden. Fig. 10 zeigt eine mögliche Ausführungsform der Erfindung für das Beispiel einer Einbauleuchte, wobei dieselbe Ausgestaltung auch für andere Leuchtentypen verwendet werden kann. Die Einbauleuchte gemäß Fig. 10 besitzt ein Gehäuse 80, das in konventioneller Weise mit einem Einbauring 82 sowie einer Befestigungseinrichtung 84 zum Befestigen an einer Decke 86 versehen ist. In dem Gehäuse 80 ist ein Hohllichtleiter 88 ausgebildet. Der Hohlraum 90 dieses Hohllichtleiters 88 wird durch eine kreisringförmige Dachwand 92, eine der Dachwand 92 gegenüberliegende Lichtauskoppeleinrichtung 94 sowie durch einen Teil der Seitenwand des Gehäuses 80 gebildet, welches eine Seitenwand 96 des Hohllichtleiters 88 bildet. Die Dachwand 92 und die Seitenwand 96 sind auf der dem Hohlraum 90 zugewandten Seite reflektierend ausgebildet. Durch eine zentrale Öffnung der Dachwand 92 ist eine Lampe 98 in den Hohlraum 90 eingeführt, so daß sie ihr Licht direkt in den Hohlraum 90 abgibt. Die Lampe 98 kann beispielsweise eine Halogenglühlampe, eine Hochdrucklampe mit Keramikbrenner oder dgl. sein. Im Idealfall hat die Lampe 98 die Eigenschaften einer punktförmigen Lichtquelle. Zusätzliche Reflektoren (nicht dargestellt) können der Lampe 98 zugeordnet sein, um die Lichteinstrahlung von der Lampe in den Hohlraum 90 zu optimieren. Der Dachreflektor ist bei diesem Ausführungsbeispiel zur Mitte hin (vom Hohlraum 90 aus gesehen) konvex gekrümmt, so daß die Höhe des Hohlraums 90 und damit des Hohllichtleiters 88 insgesamt in der Richtung radial nach außen, d.h. von der Lampe 98 weg, abnimmt. Die Lichtauskoppeleinrichtung 94 ist, wie bei den vorangehend beschriebenen Ausführungsbeispielen, durch zwei Prismenplatten 18 und 20 gebildet, wie sie vorangehend beschrieben wurden. Die lichttechnische Wirkungsweise des Hohllichtleiters und der Lichtauskoppeleinrichtung bei dieser Ausführungsform entspricht im wesentlichen derjenigen der vorangehenden Ausführungsformen und wird daher nicht noch einmal beschrieben. Die Anordung der Lampe 98 kann bei dieser Ausführungsform variieren. Sie kann, wie in Fig. 10 gezeigt, sich teilweise in den Hohlraum 90 hinein erstrecken, aber auch vollständig in dem Hohlraum 90 aufgenommen sein oder sich bis zu ihrem Fassungsende in dem Hohlraum 90 befinden. Andererseits kann auch vorgesehen sein, daß die Lampe insgesamt außerhalb des Hohlraums 90 angeordnet ist und, ggf. im Zusammenwirken mit einem entsprechend gestalteten Einkoppelreflektor, Licht über die zentrale Öffnung der Dachwand 92 in den Hohlraum 90 einkoppelt.

Oberhalb der Dachwand 92 und vom Zentrum nach außen versetzt ist an dem Gehäuse 80 ein Vorschaltgerät 100 angebracht, das sich teilweise in einen Bereich erstreckt, in dem die Höhe des Hohllichtleiters 88 vermindert ist. Der Raum in dem Gehäuse 80, der sich durch diese sich vermindernde Höhe des Hohllichtleiters zu der von der Lampe 98 abgewandten Seite ergibt, wird also in vorteilhafter Weise dafür benutzt, um das Vorschaltgerät 100, oder allgemeiner elektrische und/oder mechanische Komponenten unterzubringen, so daß insgesamt eine geringere Bauhöhe erreicht werden kann. Von diesem Konzept kann selbstverständlich auch bei den anderen vorangehend beschriebenen Ausführungsformen Gebrauch gemacht werden. Beispielsweise kann bei dem Ausführungsbeispiel gemäß Fig. 5 ein Vorschaltgerät im Bereich des waagrechten Dachwandabschnitts 40b angebracht sein.

Fig. 11 zeigt eine Abwandlung des Ausführungsbeispiels gemäß Fig. 10, diesmal für das Beispiel einer Pendelleuchte. Gleiche Bauelemente wie in Fig. 10 sind mit den gleichen Bezugszeichen versehen und werden nicht noch einmal beschrieben. Bei der Ausführungsform gemäß Fig. 11 ist eine Dachwand 110 als Begrenzung des Hohlraums 90 vorgesehen, welche, anders als bei dem Ausführungsbeispiel gemäß Fig. 10, vom Hohlraum 90 aus gesehen, nicht konvex, sondern konkav gekrümmt ist. Auch bei dieser Ausführungsform verringert sich die Höhe des Hohlraums 90 in der Richtung von der Lampe 98 zum radial äußeren Rand. Bei dieser Ausführungsform entfallen die Seitenwände 96, da die Dachwand 110 direkt auf dem Niveau der dem Hohlraum 90 zugewandten Seite der Platte 18 abschließt.

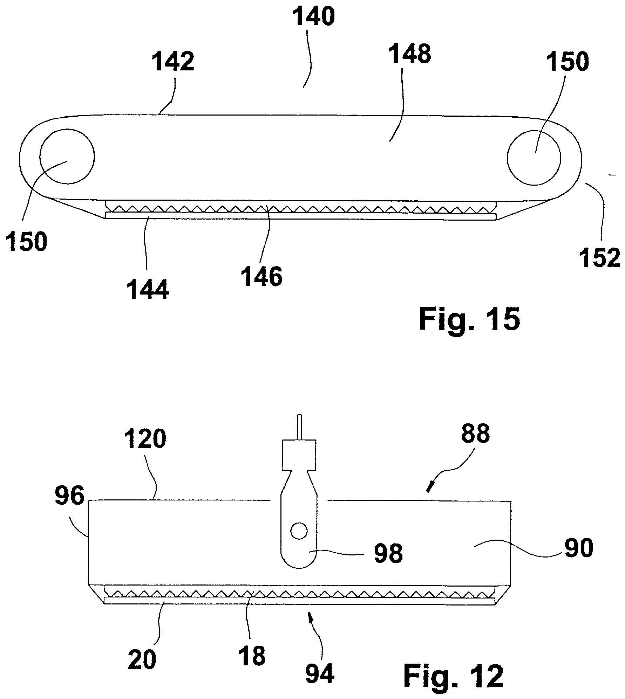

Die Höhe des Hohllichtleiters muß erfindungsgemäß nicht notwendigerweise in einem lampenfernen Bereich abgesenkt sein. Fig. 12 zeigt schematisch eine Abwandlung der Ausführungsform gemäß Fig. 10, wobei für die Lichttechnik nicht wesentliche Bestandteile, wie das Gehäuse und dgl., weggelassen sind. Gleiche Elemente wie in Fig. 10 sind mit den gleichen Bezugszeichen bezeichnet. Bei der Ausführungsform gemäß Fig. 12 besitzt der Hohllichtleiter 88 eine ebene Dachwand 120, die zu dem Hohlraum 90 hin reflektierend ausgebildet ist. Dementsprechend besitzt der Hohlraum 90 über dem gesamten Querschnitt eine konstante Höhe. Die Lichteinkopplung in den Hohllichtleiter 88 und die Lichtauskopplung über die Prismenplatten 18 und 20 folgt den gleichen Prinzipien wie vorangehend für die Ausführungsform der Fig. 10 beschrieben. In Fig. 12 und den nachfolgenden Figuren ist die Richtung der Prismen in den Prismenplatten um 90° gedreht dargestellt.

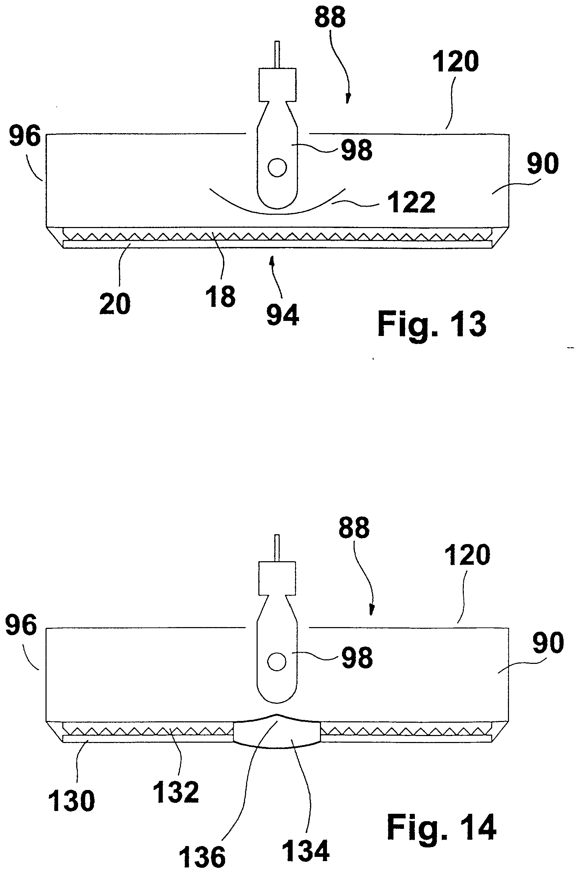

Fig. 13 zeigt eine Abwandlung der Ausführungsform gemäß Fig. 12, bei der unterhalb der Lampe 98 zusätzlich ein Reflektor 122 angeordnet ist, der zumindest auf der der Lampe 98 zugewandten Seite reflektierend, vorzugsweise spiegelnd ausgebildet ist. Dieser Reflektor reflektiert das Licht der Lampe 98 nach oben zu der Dachwand 120, von wo aus es sich dann über den Hohlraum 90 verteilt. Auf diese Weise wird ein heller Fleck unterhalb der Lampe auf der Lichtaustrittsfläche der Leuchte vermieden. Der Reflektor 122 kann auch auf der den Prismenplatten 18 und 20 zugewandten Seite reflektierend ausgebildet sein. Bei entsprechender Dimensionierung hat er dann einen ähnlichen Effekt wie beispielsweise die abgesenkten Wandabschnitte 40a, 40b und 40c bei der Ausführungsform gemäß Fig. 5.

Die Figur 14 zeigt eine weitere Abwandlung der Ausführungsform der Fig. 12, wobei wieder gleiche Bezugszeichen gleiche Bauteile bezeichnen. Im Falle dieser Ausführungsform besitzen die Prismenplatten 130 und 132 ein zentrales Loch, in welches ein Reflektor 134 eingesetzt ist. Dieser Reflektor 134 befindet sich direkt unterhalb der Lampe 98 und ist auf die Lampenachse, wie in Fig. 14 angedeutet, zentriert. Der Reflektor 134 verhindert einen direkten Lichtdurchtritt des Lichts von der Lampe nach unten und lenkt das auf ihn einfallende Licht der Lampe in der Darstellung der Fig. 14 nach rechts und links, was durch eine Spitze 136 im Zentrum des Reflektors zwischen zwei Bereichen mit entgegengesetzter Krümmung begünstigt wird. Die Prismenplatten 130 und 132 sind mit parallelen geradlinigen Prismen mit einem dreieckigen Querschnitt ausgebildet, wie dies vorangehend für die Prismenplatten 18 und 20 beschrieben wurde. Die Längsrichtung der Prismen der Platte 130 steht senkrecht zu der Längsrichtung der Prismen der Platte 132.

Ein Hohllichtleiter mit einer im Querschnitt konstanten Höhe kann auch bei Ausführungsformen der Erfindung verwendet werden, bei denen die Lichtquelle am radial inneren oder äußeren Rand des Hohllichtleiters angeordnet ist. Fig. 15 zeigt schematisch eine derartige Ausführungsform. Ein kreisförmiger Hohllichtleiter 140 wird durch eine kreisförmige Dachwand 142 und der Dachwand 142 gegenüberstehende kreisförmige Prismenplatten 144 und 146 gebildet, welche zwischen sich einen Hohlraum 148 bilden, der am radial äußeren Rand offen ist. In diesen Hohlraum wird von einer am radial äußeren Rand angeordneten Lampe 150, der ein Einkoppelreflektor 152 zugeordnet ist, Licht eingekoppelt. Die Prismenplatten 144 und 146 sind mit parallelen geradlinigen Prismen mit einem dreieckigen Querschnitt ausgebildet, wie dies vorangehend für die Prismenplatten 18 und 20 beschrieben wurde. Auch hier steht die Längsrichtung der Prismen der Platte 144 senkrecht auf der Längsrichtung der Prismen der Platte 146.

Elemente und Prinzipien der verschiedenen vorangehend beschriebenen Ausführungsformen lassen sich selbstverständlich kombinieren. Beispielsweise können, wie vorangehend erwähnt, auch bei den Ausführungsbeispielen gemäß Fig. 1 bis 9 elektrische oder mechanische Komponenten ganz oder teilweise in einem Bereich zwischen der Dachwand des Hohllichtleiters und der Gehäusewand untergebracht sein, in welchem die Höhe des Hohllichtleiters vermindert ist, um so eine geringere Bauhöhe zu erreichen. Konvex, konkav oder andersartig gekrümmte Dachwände können selbstverständlich auch als Dachwand oder Dachwandabschnitt bei den Ausführungsbeispielen gemäß Fig. 1 bis 9 verwendet werden, ebenso wie bei den Ausführungsbeispielen gemäß Fig. 10 und 11 auch Dachwände oder Dachwandabschnitte verwendet werden können, die in einem radialen Querschnitt gerade und geneigt sind. Ebenso kann die Dachwand beliebige Kombinationen von ebenen geneigten Abschnitten zu der Lichtauskoppelfläche parallelen, geraden ebenen Abschnitten und konvex oder konkav gekrümmten Abschnitten enthalten, bei denen der Abstand der Dachwand von der Lichtauskoppelfläche, ausgehend von einer Lichteinkoppelstelle, zumindest über einen Teilabschnitt abnimmt. Abweichend von den vorangehend beschriebenen Ausführungsformen kann auch vorgesehen sein, daß die Dachwand des Hohllichtleiters eben und im Betriebszustand waagrecht ist, während die Prismenplatten der Lichtauskoppeleinrichtung zu der Dachwand geneigt oder gekrümmt sind.

Die für die einzelnen Ausführungsbeispiele jeweils gewählten Leuchtenformen sind vollständig beispielhaft und sollen lediglich beispielhaft mögliche Anwendungsgebiete der Erfindung illustrieren. Erfindungsgemäße Leuchten können als Rundleuchten, Downlights, Anbauleuchten, Einbauleuchten oder Pendelleuchten ausgeführt sein, um einige Beispiele zu nennen.

Statt der Lampen, die mit Bezug auf die vorangehend beschriebenen Ausführungsbeispiele erwähnt wurden, können auch andersartige Lichtquellen, z.B. Kompaktleuchtstofflampen, Hochdrucklampen, Halogenglühlampen, Leuchtdioden, photolumineszente Folien oder dgl., verwendet werden.

Wenn eine Lampe oder eine andere Lichtquelle ganz oder teilweise in dem Hohlraum des Hohllichtleiters aufgenommen ist, muß die Lampenachse bzw. die Längsachse der Lichtquelle nicht notwendigerweise senkrecht auf der Lichtauskoppeleinrichtung, z.B. den Prismenplatten 18 oder 20, stehen. Es kann auch vorgesehen sein, daß die Lampenachse bzw. die Längsachse der Lichtquelle parallel zu der Lichtauskoppeleinrichtung oder in einem Winkel kleiner als 90° zu dieser geneigt ist.

Je nach den lichttechnischen Anforderungen an die Abschirmung kann anstelle von zwei Prismenplatten mit zwei zueinander senkrecht stehenden Prismenstrukturen auch eine andere Anzahl von Prismenplatten verwendet werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| 1 | Gehäuse |
|---|---|
| 3 | Lichtaustrittsfläche |
| 10 | Hohllichtleiter |
| 12 | Hohlraum |
| 14 | Dachwand |
| 14a, 14b | Wandabschnitt |
| 16 | Lichtauskoppeleinrichtung |
| 18 | Prismenplatte |
| 20 | Prismenplatte |
| 22 | Ringlampe |
| 24 | Einkoppelreflektor |
| 30 | Prisma |
| 32, 32a, 32b | Prismengrat |
| 34, 34a, 34b | Vertiefung |
| 36 | Prisma |
| 38, 38a, 38b | Prismengrat |
| 39, 39a, 39b | Vertiefung |
| 40 | Dachwand |
| 40a, 40b | Abschnitte der Dachwand |
| 42 | Vorschaltgerät |
| 50 | Hohllichtleiter |
| 52 | Hohlraum |
| 54 | Dachwand |
| 56 | Seitenwand |
| 58 | Lichtauskoppeleinrichtung |
| 60 | Ringlampe |
| 62 | Einkoppelreflektor |
| 64 | Abdeckung |

| 70 | Hohllichtleiter |
|---|---|
| 72 | Dachwand |
| 72a, 72b | Dachwandabschnitt |
| 74 | Lichtauskoppeleinrichtung |
| 76 | oberer Reflektor |
| 78 | unterer Reflektor |
| 80 | Gehäuse |
| 82 | Einbauring |
| 84 | Befestigungseinrichtung |
| 86 | Decke |
| 88 | Hohllichtleiter |
| 90 | Hohlraum |
| 92 | Dachwand |
| 94 | Lichtauskoppeleinrichtung |
| 96 | Seitenwand |
| 98 | Lampe |
| 100 | Vorschaltgerät |
| 110 | Dachwand |
| 120 | Dachwand |
| 122 | Reflektor |
| 130 | Prismenplatte |
| 132 | Prismenplatte |
| 134 | Reflektor |
| 136 | Spitze |
| 140 | Hohllichtleiter |
| 142 | Dachwand |
| 144 | Prismenplatte |
| 146 | Prismenplatte |
| 148 | Hohlraum |
| 150 | Lampe |
| 152 | Einkoppelreflektor |

**Patentansprüche**

1. Leuchte zur Beleuchtung von Innenräumen mit einem nicht dreieckigen oder viereckigen Gehäuse (1; 80) und/oder einer nicht dreieckigen oder viereckigen Lichtaustrittsfläche (3), insbesondere Rundleuchte oder Downlight, welche mindestens einen Hohllichtleiter (10; 50; 70; 88, 140) mit einem Hohlraum (12; 52; 90) aufweist, in den Licht einer oder mehrerer Lichtquellen (22; 60; 98) eingestrahlt wird und aus dem Licht über mindestens eine Lichtauskoppeleinrichtung (16; 58; 74; 94) zum Austritt an einer Lichtaustrittsfläche (3) der Leuchte ausgekoppelt wird, wobei die Lichtauskoppeleinrichtung aus einem lichtdurchlässigen Material besteht und eine oder mehrere Grenzflächen zwischen zwei Medien mit unterschiedlichem Brechungsindex aufweist, die mit einer lichtbrechenden Struktur (30, 36) versehen sind, **dadurch gekennzeichnet, daß** zumindest zwei lichtbrechende Strukturen (30, 36) mit linienförmigen Strukturelementen vorgesehen sind, wobei die lichtbrechenden Strukturen (30, 36) in mehreren Flächen senkrecht zu der Lichtaustrittsfläche (3) der Leuchte eine Lichtauskopplung oberhalb eines Grenzwinkels zu einer Senkrechten zu der Lichtaustrittsfläche (3) im wesentlichen verhindern und dadurch eine Abschirmung, bezogen auf diese Flächen, erzeugen, und daß zumindest eine der lichtbrechenden Strukturen aus geradlinigen, parallelen lichtbrechenden Strukturelementen besteht, und die Linien, welche die Geometrie der ersten Struktur (30) definieren, mit den Linien, welche die Geometrie der zweiten Struktur (36) definieren, einen nicht verschwindenden Winkel einschließen.

2. Leuchte nach Anspruch 1, **dadurch gekennzeichnet, daß** die lichtbrechende Struktur Strukturelemente (30, 36) aufweist, welche Seitenwände im wesentlichen parallel zu der Linienrichtung aufweisen und an dem freien Ende der Strukturelemente einen Winkel (w) einschließen, der größer als 90° ist.

3. Leuchte nach einem der Ansprüche 1 bis 2, **dadurch gekennzeichnet, daß** Licht von einer oder mehreren Lichtquellen (22; 60) von der radialen Außenseite des Hohlraums (12) aus eingekoppelt wird.

4. Leuchte nach einem der Ansprüche 1 bis 3, **dadurch gekennzeichnet, daß** der Hohllichtleiter (50) einen radial inneren Rand besitzt und eine oder mehrere Lichtquellen (60) entlang des radial inneren Rands angeordnet sind.

5. Leuchte nach Anspruch 4, **dadurch gekennzeichnet, daß** an einen inneren radialen Rand eines ersten Hohllichtleiters (50) anschließend ein zweiter, konzentrischer Hohllichtleiter (70) vorgesehen ist, wobei eine oder mehrere Lichtquellen (60) zwischen dem inneren radialen Rand des ersten Hohllichtleiters (50) und dem äußeren radialen Rand des zweiten Hohllichtleiters (70) angeordnet sind.

6. Leuchte nach einem der Ansprüche 1 bis 5, **dadurch gekennzeichnet, daß** eine Lichtquelle (98) zumindest teilweise in dem Hohlraum (90) aufgenommen ist.

7. Leuchte nach Anspruch 6, **dadurch gekennzeichnet, daß** eine Lichtquelle sich durch eine Öffnung in einer Wand des Hohllichtleiters (92; 110) in den Hohlraum (90) des Hohllichtleiters (80) erstreckt.

8. Leuchte nach einem der Ansprüche 1 bis 7, **dadurch gekennzeichnet, daß** der Lichtauskoppeleinrichtung gegenüberliegend eine reflektierende, den Hohlraum begrenzende Wand (14; 40; 54; 72; 92; 110) vorgesehen ist, deren Abstand von den Elementen der Lichtauskoppeleinrichtung (18, 20), ausgehend von der Stelle einer Lichtauskopplung, zumindest über einen Teilabschnitt abnimmt.

9. Leuchte nach Anspruch 8, **dadurch gekennzeichnet, daß** ein oder mehrere elektrische und/oder mechanische Komponenten (100) außerhalb des Hohllichtleiters (92; 110) angeordnet sind, die sich zumindest teilweise in einen Abschnitt eines Raumbereichs außerhalb des Hohllichtleiters (92; 110) erstrecken, in dem die besagte Wand des Hohllichtleiters (92; 110) einen gegenüber der Lichteinkoppelstelle verringerten Abstand von der Lichtauskoppeleinrichtung (94) besitzt und der zwischen der Lichtauskoppeleinrichtung (94) und einer Ebene liegt, deren Abstand von der Lichtauskoppeleinrichtung (94) dem maximalen Abstand der besagten Wand (92; 110) von der Lichtauskoppeleinrichtung (94) entspricht.

10. Leuchte nach einem der Ansprüche 1 bis 9, **dadurch gekennzeichnet, daß** eine erste Lichtauskoppeleinrichtung zur Abgabe eines Direktanteils des abgestrahlten Lichts und eine zweite Lichtauskoppeleinrichtung zur Abgabe eines Indirektanteils des abgestrahlten Lichts vorgesehen sind.

11. Leuchte nach Anspruch 10, **dadurch gekennzeichnet, daß** eine einer ersten Lichtauskoppeleinrichtung gegenüberliegende Wand insgesamt oder in Teilabschnitten zumindest teilweise lichtdurchlässig ausgebildet ist.

**Claims**

1. Luminaire for illuminating interiors with a non-triangular or rectangular housing (1; 80) and/or a non-triangular or rectangular light emission window (3), in particular a round light or downlight, which comprises at least one hollow light conductor (10; 50; 70; 88, 140) with a cavity space (12; 52; 90), into which light is beamed in from one or more light sources (22; 60; 98) and from which light is coupled out via at least one light coupling out device (16; 58; 74; 94) to emission at a light emission surface (3) of the luminaire, wherein the light coupling out device consists of a light-permeable material and comprises one or more boundary surfaces between two media with different refractive indices, which are provided with a light-refractive structure (30, 36), **characterized in that** at least two light refractive structures (30, 36) are provided with linear-shaped structure elements, wherein the light refractive structures (30, 36), in a plurality of surfaces perpendicular to the light emission window (3) of the luminaire, essentially prevent the coupling out of light above a limit angle to a plane perpendicular to a light emission window (3), and thereby create a screening effect related to these surfaces, and that at least one of the refractive structures consists of straight-line parallel light refractive structure elements, and the lines which define the geometry of the first structure (30) enclose a non-zero angle with the lines which define the second structure (36).

2. Luminaire according to claim 1, **characterized in that** the light refractive structure comprises structure elements (30, 36) which comprise side walls essentially parallel to the line direction and at the free ends of the structure elements enclose an angle (w) which is greater than 90 °.

3. Luminaire according to any one of claims 1 or 2, **characterized in that** light from one or more light sources (22; 60) is coupled in from the radial outside of the cavity space (12).

4. Luminaire according to any one of claims 1 to 3, **characterized in that** the hollow light conductor (50) comprises a radial interior edge and that one or more light sources (60) are arranged along the radial interior edge.

5. Luminaire according to claim 4, **characterized in that** a second concentric hollow light conductor (70) is provided, connecting to an interior radial edge of a first hollow light conductor (50), wherein one or more light sources (60) are arranged between the inner radial edge of the first hollow light conductor (50) and the outer radial edge of the second hollow light conductor (70).

6. Luminaire according to any one of claims 1 to 5, **characterized in that** a light source (98) is at least partially accommodated in the cavity space (90).

7. Luminaire according to claim 6, **characterized in that** one light source extends through an opening in a wall of the hollow light conductor (92; 110) into the cavity space (90) of the hollow light conductor (80).

8. Luminaire according to any one of claims 1 to 7, **characterized in that** the light coupling-out device is provided opposite a reflecting wall (14; 40; 54; 72; 92; 110) delimiting the cavity space, the distance interval of which from the elements of the light coupling-out device (18, 20), starting from a light coupling-out point, decreases at least over a part section.

9. Luminaire according to claim 8, **characterized in that** one or more electrical and/or mechanical components (100) are arranged outside the hollow light conductor (92; 110), which at least partially extend into a section of a spatial region outside the hollow light conductor (92; 110), in which the said wall of the hollow light conductor (92; 110) has a distance interval from the light coupling-out device (94) which decreases opposite the light coupling-in point, and lies between the light coupling-out device (94) and a plane, the distance interval of which from the light coupling-out device (94) corresponds to the maximum distance interval of the said wall (92; 110) from the light coupling-out device (94).

10. Luminaire according to any one of claims 1 to 9, **characterized in that** a first light coupling-out device is provided for the emission of a direct portion of the emitted light and a second light coupling-out device is provided for the emission of an indirect portion of the emitted light.

11. Luminaire according to claim 10, **characterized in that** a wall located opposite a first light coupling-out device, is configured overall or in part sections as at least partially light-permeable.


**Revendications**

1. Luminaire pour l'éclairage d'espaces internes avec un boîtier (1 ; 80) non triangulaire ou rectangulaire et/ou une surface de sortie de lumière (3) non triangulaire ou rectangulaire, plus particulièrement un luminaire rond ou un downlight, qui comprend au moins une fibre optique creuse (10 ; 50 ; 70 ; 88, 140) avec une cavité (12 ; 52 ; 90) dans laquelle la lumière d'une ou de plusieurs sources de lumière (22 ; 60 ; 98) est introduite et qui est couplée, à partir de la lumière, par l'intermédiaire d'au moins un dispositifi de sortie de lumière (16 ; 58 ; 74 ; 94), à la sortie, à la surface de sortie de lumière (3) du luminaire, le dispositif de sortie de lumière étant constitué d'un matériau transparent et une ou plusieurs surfaces limites entre deux milieux avec des indices de réfraction différents, qui sont munies d'une structure réfringente (30, 36), **caractérisé en ce qu'**au moins deux structures réfringentes (30, 36) sont prévues avec des éléments structurels linéaires, les structures réfringentes (30, 36) empêchant globalement, dans plusieurs surfaces perpendiculaires à la surface de sortie de lumière (3) du luminaire, une sortie de lumière au-delà d'un angle limite par rapport à une ligne perpendiculaire à la surface de sortie de lumière (3) et assurant ainsi une protection par rapport à ces surfaces et **en ce qu'**au moins une des structures réfringentes est constituée d'éléments structurels linéaires parallèles réfringents et les lignes qui définissent la géométrie de la première structure (30) formant un angle non nul avec les lignes qui définissent la géométrie de la deuxième structure (36).

2. Luminaire selon la revendication 1, **caractérisé en ce que** la structure réfringente comprend des éléments structurels (30, 36) qui comprennent des parois latérales globalement parallèles à la direction des lignes et qui forment, au niveau de l'extrémité libre des éléments structurels, un angle (w) supérieur à 90°.

3. Luminaire selon l'une des revendications 1 à 2, **caractérisé en ce que** la lumière provenant d'une ou de plusieurs sources de lumière (22 ; 60) est introduite à partir du coté extérieur radial de la cavité (12).

**4.** Luminaire selon l'une des revendications 1 à 3, **caractérisé en ce que** la fibre optique creuse (50) comprend un bord radial interne et une ou plusieurs sources de lumière (60) sont disposées le long du bord radial interne.

**5.** Luminaire selon la revendication 4, **caractérisé en ce que**, sur un bord radial interne, à la suite d'une première fibre optique creuse (50) est prévue une deuxième fibre optique creuse (70) concentrique, une ou plusieurs sources de lumière (60) étant disposées entre le bord radial interne de la première fibre optique creuse (50) et le bord radial externe de la deuxième fibre optique creuse (70).

**6.** Luminaire selon l'une des revendications 1 à 5, **caractérisé en ce qu'**une source de lumière (98) est logée au moins partiellement dans la cavité (90).

**7.** Luminaire selon la revendication 6, **caractérisé en ce qu'**une source de lumière s'étend à travers une ouverture dans une paroi de la fibre optique creuse (92 ; 110) dans la cavité (90) de la fibre optique creuse (80).

**8.** Luminaire selon l'une des revendications 1 à 7, **caractérisé en ce que**, en face du dispositif de sortie de lumière est prévue une paroi réfléchissante (14 ; 40 ; 54 ; 72 ; 92 ; 110) limitant la cavité, dont la distance par rapport aux éléments du dispositif de sortie de lumière (18, 20) diminue au moins sur une portion à partir de l'endroit de sortie de la lumière.

**9.** Luminaire selon la revendication 8, **caractérisé en ce qu'**un ou plusieurs composants électriques et/ou mécaniques (100) sont disposés à l'extérieur de la fibre optique creuse (92; 110), qui s'étendent au moins partiellement dans une portion d'une zone spatiale à l'extérieur de la fibre optique creuse (92 ; 110), dans laquelle ladite paroi de la fibre optique creuse (92 ; 110) présente, en comparaison à l'endroit de sortie de la lumière, une distance réduite par rapport au dispositif de sortie de lumière (94) et qui se trouve entre le dispositif de sortie de lumière (94) et un plan dont la distance par rapport au dispositif de sortie de lumière (94) correspond à la distance maximale de ladite paroi (92 ; 110) par rapport au dispositif de sortie de lumière (94).

**10.** Luminaire selon l'une des revendications 1 à 9, **caractérisé en ce qu'**un premier dispositif de sortie de lumière est prévue pour l'émission d'une part directe de la lumière émise et un deuxième dispositif de sortie de lumière est prévue pour l'émission d'une part indirecte de la lumière émise.

**11.** Luminaire selon la revendication 10, **caractérisé en ce qu'**une paroi opposée à un premier dispositif de sortie de lumière est conçue de manière transparente dans son ensemble ou au moins partiellement sur certaines parties.

**1**

III

**30**

II

**3**

II

III

# Fig. 1

Fig. 2

Fig. 3

Fig. 4

**Fig. 5**

**Fig. 6**

**Fig. 7**

**Fig. 8**

72    70

60    76

54    50        72a        72b        60    54

56

58        74        78        58

60        70        78        50

**Fig. 9**

**Fig. 10**

**Fig. 11**

140

142    148    150

150

152

144    146

## Fig. 15

120    88

96

98    90

20    18    94    ## Fig. 12

**Fig. 13**

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5863114 A
- DE 8915821 U1
- WO 0011399 A
- EP 1120600 A1